# EUROPEAN PATENT SPECIFICATION

(11) **EP 1 108 075 B1**
(45) Date of publication and mention of the grant of the patent: **27.10.2004**
(21) Application number: 99939047.9
(22) Date of filing: 06.08.1999
(51) Int. Cl.: D01F 6/84, D01F 6/82, D01F 6/92, D01F 6/46, D01F 8/14, C08G 63/199, C08G 69/44, C08L 67/02, C08L 77/12

(54) **COPOLYESTER BINDER FIBERS**
COPOLYESTER-BINDERFASERN
FIBRES DE LIAISON DE CO-POLYESTER

(30) Priority: 28.08.1998 US 143437; 06.11.1998 US 187004
(43) Date of publication of application: 20.06.2001
(73) Proprietor: EASTMAN CHEMICAL COMPANY, Kingsport, TN 37660 (US)
(72) Inventor: HAILE, William, Anston, Kingsport, TN 37663 (US); DEAN, Leron, Ronnie, Kingsport, TN 37664 (US); MCCONNELL, Richard, Leon, Kingsport, TN 37660 (US)
(74) Representative: Wibbelmann, Jobst, Dr., Dipl.-Chem.
(86) International application number: PCT/US1999/017830
(87) International publication number: WO 2000/012792

(56) References cited:
- WO-A-97/30102
- WO-A-99/10573
- WO-A-99/24648
- US-A- 2 901 466
- US-A- 4 576 977

## Description

### Field of the Invention

The invention relates to fibers, particularly binder fibers, made from copolyesteramides and the copolyesteramides themselves. The copolyesteramides of the invention are generally formed from a glycol component containing 1,3- or 1,4-cyclohexanedimethanol and ethylene glycol, at least one dicarboxylic acid component and at least one amine compound. Such copolyesteramides may be formed into a variety of products, especially binder fibers for nonwoven fabrics, textile and industrial yams, and composites.

### Background of the invention

Nonwoven fabrics are widely used in a variety of products. For example, nonwoven fabrics are suitable for use in filters, roofing materials, composites, backing materials, linings, insulation, medical/surgical applications, bedding, tablecloths, and diapers. High loft batting nonwoven fabrics are used in a wide variety of products, including comforters, robe wear, and bra cups. Generally nonwoven fabrics are based on polyester, acrylic, nylon, glass and cellulosic fibers which may be bonded with latex adhesives, binder fibers, or polymers in powder form. The bonding of nonwoven fabrics with binder fibers provides a convenient method for making nonwoven fabrics without the need for water-based adhesives which are less environmentally friendly. Nonwoven fabrics bonded with binder fibers are economical to produce, and provide a method for making articles, which are unique or superior in performance. Other applications are uses in yams to increase strength or reduce pilling, and uses in prepregs, preforms and a wide range of composite structures.

Certain copolyesters have been found to be useful as binder fibers. For example, polyethylene terephthalate (PET) copolyesters containing 1,4-cyclohexanedimethanol having inherent viscosity (I.V.) values in the range of about 0.6 to about 0.8 dl/g have been used in the past as binder fibers to bond polyester or other fibers. Copolyesters with lower I.V. values, however, were believed to not have adequate bonding strength.

It is well known that copolyesters can be prepared by processes involving polyesterification and polycondensation. Generally, as described in U.S. Patents 2,901,466, 5,017,680, 5,106,944 and 5,668,243, the reactants include glycol components and dicarboxylic acid components. Typically, one dicarboxylic acid component is terephthalic acid and one dihydric alcohol is ethylene glycol. Such copolyesters are relatively inert, hydrophobic materials which are suitable for a wide variety of uses, including, molded articles, such as those used in the automobile and appliance industries, food trays, fibers, sheeting, films and containers, such as bottles. The use of ethylene glycol as the only diol, however, is accompanied by undesirable properties such as yellow discoloration and weak fiber binding properties. Indeed, such polymers tend to be opaque, crystalline polymers with high melting temperatures which may make them unsuitable for use as binder fibers. To remedy the problems with polyethylene terephthalates, polyethylene terephthalate copolyesters have been formed with 1,4-cyclohexanedimethanol or isophthalic acid.

Previous attempts at forming copolyesters with 1,4-cyclohexanedimethanol and terephthalic acid have focused upon copolyesters having high inherent viscosities, I.V., of greater than 0.6, due to the belief that low inherent viscosities would not possess adequate strength. In particular, it was believed that low inherent viscosity copolyesters were unable to provide adequate bonding strength to form commercially acceptable binder fibers. Indeed, previous polyethylene terephthalate copolyesters containing 1,4-cyclohexanedimethanol were made with inherent viscosities ranging from 0.6 to 0.8 dl/g to form binder fibers to bond polyesters or other fibers. However, such attempts have not been entirely successful in providing copolyesters having the desired high clarity and hue or bonding capability at low activation temperatures when in the form of a binder fiber.

Further relevant teachings are disclosed in WO 99/10573, and WO 99/24 648.

Other attempts at forming copolyesters suitable for use as binder fibers have focused on polyethylene terepthalate copolyesters which have been formed with isophthalic acid and diethylene glycol. Such attempts have resulted in unicomponent and bicomponent binder fibers sold as BELLCOMM® available from Unitika of Osaka, Japan, MELTY® available from Kanebo, Ltd. of Osaka, Japan, CELBOND® available from KoSa and the like. These products however, have failed to recognize the clarity, bonding temperature, bonding strength and cost benefits of forming copolyesters containing both isophthalic acid and 1,3- or 1,4-cyclohexanedimethanol.

There exists a need in the art for cost-effective copolyesteramides formed from 1,3- or 1,4-cyclohexanedimethanol, ethylene glycol, isophthalic acid, at least one dicarboxylic acid selected from terephthalic acid, naphthalenedicarboxylic acid, 1,3- or 1,4-cyclohexanedicarboxylic acid or esters thereof and at least one amine compound. Such copolyesteramides possess improved clarity and color as well as improved binder fiber bonding strength at low activation temperatures.

### Summary of the Invention

The invention answers the problems connected with previous binder fibers and copolyesters by providing binder fiber copolyesteramides having excellent color, thermoplastic flow and increased bonding versatility as well as catalysts for producing such copolyesteramides. The copolyesteramides of the invention as recited in the claims are suitable for use in a wide variety of applications, such as binder fibers for making nonwoven fabrics and textile and industrial yams.

More specifically, the invention provides copolyesteramides which are prepared with glycol components, dicarboxylic acid components and amine compounds present in an amount up to 20 mole %. The glycol component generally contains 1,3- and/or 1,4-cyclohexanedimethanol in an amount ranging from 5 to 60 mole %, 1,3-propanediol in an amount of up to 55 mole % and ethylene glycol in an amount ranging from 40 to 95 mole %. The dicarboxylic acid component generally contains at least 50 mole % of an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof. In one preferred embodiment, the dicarboxylic acid component generally contains an acid, anhydride, acid chloride or ester of isophthalic acid in an amount ranging from greather than 10 mole % to 50 mole % and at least 50 mole % of a dicarboxylic acid component selected from the group consisting of acids or esters of terephthalic acid, naphthalenedicarboxylic acid, 1,3- or 1,4-cyclohexanedicarboxylic acid and mixtures thereof.

The copolyesteramide of the invention is formed such that the resulting copolyesteramides have excellent thermoplastic flow and bonding capability. Typically, the inherent viscosities of the copolyesteramide is less than 0.7 dl/g when employing greater than 10 mole % isophthalic acid, anhydride, acid chloride or ester thereof and less than about 0.6 dl/g when employing less than about 10% isophthalic acid, anhydride, acid chloride or ester thereof Indeed, the copolyesteramides of the invention are particularly suited for use as binder fibers because the copolyesteramides can possess a lower I.V. which allows improved bonding of the binder fiber for nonwoven fabrics at relatively low temperatures. The invention is discussed in more detail below.

### Detailed Description of the Invention

The invention relates to fibers, particularly binder fibers, made from copolyesteramides, as well as the copolyesteramides themselves. The copolyesteramides of the invention tend to possess excellent color as they are generally clearer, exhibit a more neutral hue or a brighter appearance than previous polyesters and may accept dyes more easily than previous copolyesters. Indeed, with the invention, clear and non-opaque copolyesteramide polymers may be formed and readily be processed into binder fibers having excellent binding properties. Furthermore, the processing of the copolyesteramides into binder fibers may be aided through the use of the lower melt spinning temperatures of the preferred lowered I.V. copolyesteramides of the invention. For example, a 0.47 I.V. copolyester of the invention can be spun as low as 215 °C.

The copolyesteramides of the invention are formed from the reaction of a glycol component, a dicarboxylic acid component and an amine compound present in an amount of up to 20 mole%. Generally, the glycol component comprises 1,3- or 1,4-cyclohexanedimethanol in an amount ranging from 5 to 60 mole %, ethylene glycol in an amount ranging from 40 to 95 mole % and 1,3-propanediol in an amount of up to 55 mole %. The dicarboxylic acid component generally contains at least 50 mole % of an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof. These features and others are discussed in more detail below.

### Glycol Component

As mentioned above, the glycol component generally comprises 1,3- and/or 1,4-cyclohexanedimethanol in an amount ranging from 5 to 60 mole %. Preferably the 1,3-and/or 1,4-cyclohexanedimethanol is present in an amount ranging from 5 to 40 mole % and more preferably in an amount ranging from 8 to 35 mole %.

Generally, ethylene glycol is present in the glycol component in an amount ranging from 40 to 95 mole %. Preferably the ethylene glycol is present in an amount ranging from 60 to 95 mole % and more preferably 65 to 92 mole %. A preferred glycol component is formed with only 1,3- and/or 1,4-cyclohexanedimethanol and ethylene glycol. Generally, the 1,3- or 1,4-cyclohexanedimethanol may be a cis-, trans-, or cis/trans mixture of isomers with the 1,4-,cyclohexanedimethanol being preferred,

Additionally, in another embodiment of the invention, when the dicarboxylic acid component contains less than about 10 mole % isophthalic acid or anhydride, acid chloride or ester thereof, it is preferred that 1,3- or 1,4-cyclohexanedimethanol is present in an amount ranging from 20 to 40 mole %, most preferably 25 to 35 mole % and ethylene glycol is present in an amount of from 60 to 80 mole % and preferably 65 to 75 mole %.

In addition to the 1,3- or 1,4-cyclohexanedimethanol and ethylene glycol, the glycol component may include up to 55 mole %, and preferably up to 30 mole %, more preferably up to 10 mole % 1,3-propanediol. Likewise the glycol component may contain up to 20 mole %, and preferably up to 4 mole % diethylene glycol. Furthermore, the glycol component may also include up to 10 mole % of conventional glycols including, but not limited to, glycols containing 3 to 12 carbon atoms such as propylene glycol, 1,4-butanediol, 1,5-pentanediol, 1,6-hexanediol, 2,2,4-trimethyl-1,3-propanediol, 2-ethyl-2-butyl-1,3-propanediol, 2,2,4,4-tetramethyl-1,3- cyclobutanediol, 2,4-dimethyl-2-ethyl-1,3-hexanediol, 2-ethyl-2-isobutyl-1,3-propanediol, 1,3-butanediol, 1,8-octanediol, 2,2,4-trimethyl-1,6-hexanediol, thiodiethanol, and 1,2-cyclohexanedimethanol. The cyclohexanedimethanol moieties may be present as the cis-, trans- or as a mixture of isomers. Small amounts of polymeric glycols such as poly(tetramethylene glycol) or poly(ethylene glycol) may also be used. In using such polymeric glycols, molecular weights ranging from 200 to 5000 are suitable.

### Dicarboxylic Acid Component

The dicarboxylic acid component generally contains at least 50 mole % of an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof Preferably, the dicarboxylic acid component contains at least 80 mole % and more preferably at least 90 mole % of an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof In one preferred embodiment of the invention, the dicarboxylic acid component contains 90% or more of an acid, ester or anhydride of terephthalic acid, napthalenedicarboxylic acid, and 1,3- or 1,4-cyclohexanedicarboxylic acid. In this embodiment, it is most preferred that the dicarboxylic acid component is an ester or acid of terephthalic acid.

In another preferred embodiment of the invention, the dicarboxylic acid component contains an acid, ester or anhydride of isophthalic acid in an amount ranging from at least 10 mole % to 50 mole % and at least 50 mole % of a dicarboxylic acid component selected from the group consisting of acids, anhydrides or esters of terephthalic acid, naphthalenedicarboxylic acid, 1,3- or 1,4-cyclohexanedicarboxylic acid and mixtures thereof. For this embodiment, depending upon the equipment used, the preferred dicarboxylic acid component contains either isophthalic acid and terephthalic acid or isophthalic acid and dimethyl terephthalate or dimethyl isophthalate and dimethyl terephthalate.

It should be noted that any of the naphthalenedicarboxylic acid isomers or mixtures of isomers may be used, with the 1,4-, 1,5-, 2,6- and 2,7- isomers being preferred, with the 2,6-isomer being most preferred. Additionally, the 1,3- or 1,4-cyclohexanedicarboxylic acid moieties may be as the cis-, trans- or cis/trans mixtures of isomers.

Suitable additional dicarboxylic acid components which may be added in amounts up to 10 mole % of the dicarboxylic acid component, generally contain 4 to 40 carbon atoms, for example, an acid or ester of an aromatic, aliphatic or cycloaliphatic dicarboxylic acid. Suitable additional dicarboxylic acids or esters are described in U.S. Patents 5,608,031 and 5,668,243.

Particularly preferred examples of additional dicarboxylic acid components include, but are not limited to, sulfoisophthalic acid, 1,4-cyclohexanediacetic acid, diphenyl-4,4'-dicarboxylic acid, and dimer acid. Copolyesteramides may be prepared from one or more of the above dicarboxylic acids.

### Amine Compounds

The copolyesteramides of the invention are formed in the presence of up to 20 mole % of an amine compound. Suitable amine containing compounds, include, but are not limited to, aminoalcohols and diamines in an amount of up to 20 mole % of the glycol component or amine compounds such as aminoacids and lactams in an amount of up to 20 mole % of the dicarboxylic acid component. The presence of the aminoalcohols, aminoacids, diamines or lactams in the glycol and dicarboxylic acid components provides for the formation of copolyesteramides. These polyesteramides having an I.V. of 0.7 dl/g or less, have good binder fiber properties and, in addition, have excellent dyeing characteristics. In particular, deeper dyeing may be achieved through the use of the polyesteramides as compared to unmodified polyethylene terephthalate having the same I.V.

Generally, aminoalcohols for the invention include, but are not limited to, 2-aminoethanol and 4-aminomethylcyclohexanemethanol. Typical diamines include, but are not limited to, ethylenediamine, trimethylenediamine, tetramethylenediamine, pentamethylenediamine, hexamethylenediamine, octamethylenediamine, dodecamethylenediamine and 1,4-cyclohexane-bis-methylamine. Additionally, examples of suitable lactams include, but are not limited to, caprolactam, laurolactam and azacyclododecan-2-one.

### Branching Agents

Copolyesteramides of the invention may be linear or branched. By adding a branching agent to the reaction of the glycol, dicarboxylic acid components and the amine component, the melt strength of the resulting copolyesteramide may be increased. Small ' amounts, typically less than 2 mole %, of conventional branching agents may be reacted with the glycol component, dicarboxylic acid component and the amine component to form the inventive copolyesteramides. Conventional branching agents include polyfunctional acids, anhydrides, alcohols and mixtures thereof. Examples of suitable branching agents, include, but are not limited to, trimellitic anhydride, pytomellitic dianhydride, glycerol, trimethylolpropane, and pentaerythritol.

### Reaction Process for Forming the Copolyesteramides

In forming the copolyesteramides of the invention, the reaction of the glycol component, the dicarboxylic acid component and the amine component may be carried out using conventional polyester/polyesteramide polymerization conditions. For example, when preparing the copolyesteramides by means of an ester interchange reaction, i.e., from the ester form of the dicarboxylic acid components, the reaction process may comprise two steps. In the first step, the glycol component, dicarboxylic acid component, such as, for example, dimethyl isophthalate and dimethyl terephthalate and the amine compound, are reacted at elevated temperatures, typically, 180 °C to 280 °C and pressures ranging from 0 to 414 kPa (0.0 to 60 psig). Preferably, the temperature for the ester interchange reaction ranges from 190 °C to 240 °C while the preferred pressure ranges from 104 to 276 kPa (15 psig to 40 psig). Thereafter, the reaction product is heated under still higher temperatures and under reduced pressure to form copolyesteramide with the elimination of glycol, which is readily volatilized under these conditions and removed from the system. This second step, or polycondensation step, is continued under higher vacuum and a temperature which generally ranges from 240 °C to 300 °C, preferably 245 °C to 290 °C and most preferably 250 °C to 270 °C, until a copolyesteramide having the desired degree of polymerization, determined by I.V., is obtained. The polycondensation step may be conducted under reduced pressure which ranges from 53 kPa to 13 Pa (400 mm Hg (torr) to 0.1 mm Hg (torr)).

To ensure that the reaction of the glycol component, the dicarboxylic acid component and the amine compound by an ester interchange/amide formation reaction mechanism is driven to completion, it is preferred to employ a stoichiometric excess of glycol. For example, 3 moles and more preferably about 2.3 to about 2.6 moles of glycol component to one mole dicarboxylic acid component. It being understood, however, that the ratio of glycol component to dicarboxylic acid component is generally determined by the design of the reactor in which the polymerization reaction process occurs.

To prepare a copolyesteramide by direct esterification, i.e., from the acid form of the dicarboxylic acid component, copolyesters are produced by reacting the acid form of the dicarboxylic acid component with the glycol component and the amine component. For example, isophthalic acid and terephthalic acid could be directly reacted with the glycol component and the amine component. A direct esterification/amide formation reaction may be conducted at a pressure of from 6,9 to 1380 kPa (1 to 200 pounds per square inch gauge) pressure, preferably less than 690 kPa (100 psig) to produce a low molecular weight, linear or branched copolyesteramide product having an average degree of polymerization of from about 1.4 to about 10. The temperatures employed during the direct esterification reaction typically range from 180 °C to 280 °C, more preferably ranging from 220 °C to 270 °C. This low molecular weight polymer may then be polymerized by a polycondensation reaction.

To ensure that the reaction of the glycol component, dicarboxylic acid component and the amine compound by a direct esterification/amide formation reaction mechanism is driven to completion, it is preferred to employ 3.0 to 1.01 moles, more preferably 2.5 to 1.1 moles glycol component to one mole dicarboxylic acid component. It being understood, however, that the ratio of glycol component to dicarboxylic acid component will be determined by the design of the reactor in which the reaction process occurs.

Lower I.V. copolyesteramides are generally obtained by employing shorter residence times or slow reaction rates as compared to processes for forming higher I.V. copolyesteramides. For example, the reaction rate can be slowed by reducing the reaction temperature, reducing the catalyst concentration, by increasing the absolute pressure in the reactor or by a combination of these factors.

The process of forming the copolyesteramides of the invention may be conducted as a batch, semi-batch or continuous process. Advantageously the process is operated as a continuous process. Indeed, it is possible to produce superior coloration of the copolyesteramide when using a continuous process as the copolyesteramide may deteriorate in appearance if the copolyesteramide is allowed to reside in a reactor at an elevated temperature for too long a duration.

### Catalyst System

A variety of catalyst systems being characterized by comprising 10 to 35 ppm Ti are useful in promoting the reaction of the glycol component, the dicarboxylic acid component and the amine component. Generally, without the aid of a suitable catalyst, the above reactions do not proceed at a noticeable rate. Typically a catalyst system will contain catalytic materials and catalytic inhibitors.

### Catalyst Materials

Catalytic materials which are suitable for the catalyst system include, but are not limited to, materials containing titanium, manganese, zinc, cobalt, antimony, gallium, lithium, calcium, silicon, and germanium. Such catalyst systems are described in U.S. Patents 3,907,754, 3,962,189, 4,010,145, 4,356,299, 5,017,680, 5,668,243, and 5,681,918.

Generally, the catalyst system used to prepared the copolyesters of the invention comprises materials which contain titanium in an amount of 10 to 35 ppm Ti, manganese and/or zinc and mixtures thereof. While the amounts of the individual catalytic materials in the catalyst system will vary, it is desired that the total amount of catalytic materials in the catalyst system be below 125 ppm, preferably below 100 ppm and most preferably below 80 ppm. The "ppm" for catalytic materials in the catalyst system and the catalytic inhibitor described below, refers to the weight of the element referred to and is based upon the weight of the final copolyester product.

While titanium catalytic materials may be added in the form of complexed materials such as those described in U.S. Patent 5,017,680, the titanium catalytic materials are preferably added in the form of an alkoxide in an amount ranging from 10 to 35 ppm, preferably 10 to 25 and most preferably 12 to 20 ppm. Indeed, copolyesteramides formed with lower levels of titanium catalytic materials have better stability when held in the melt. Suitable titanium alkoxides include, but are not limited to, acetyl triisopropyl titanate, tetraisopropyl titanate and tetraisobutyl titanate. Particularly preferred titanium catalytic materials include acetyl triisopropyl titanate and tetraisopropyl titanate. The titanium catalytic material may be added to the reaction process prior to direct esterification or ester interchange reaction (or amide formation reaction) or prior to the polycondensation reaction.

Manganese is typically added in the form of a salt, such as an organic acid salt in an amount ranging from 0 to 70 ppm, preferably 20 to 70 ppm, more preferably 30 to 70 ppm and most preferably 40 to 70 ppm. Examples of suitable manganese salts include, but are not limited to, manganous benzoate tetrahydrate, manganese chloride, manganese oxide, manganese acetate, manganese acetylacetonate, and manganese succinate. Manganese is added to the reaction process prior to a direct esterification or ester interchange reaction or amide formation reaction.

Zinc may be added to the catalyst system in addition to the manganese or in place of the manganese catalyst. Zinc is typically added in the form of a salt in an amount ranging from 0 to 100 ppm, preferably 25 to 100 ppm and more preferably 50 to 80 ppm. Examples of suitable zinc compounds include, but are not limited to, zinc acetate, zinc succinate, and zinc alkoxide. Zinc is typically added to the reaction process prior to an ester interchange reaction.

If desired, a cobalt catalytic material, may also be employed as part of the catalyst system. When employed, cobalt is typically added in the form of a salt, such as an organic acid salt. Examples of suitable cobalt salts include, but are not limited to, cobaltous acetate trihydrate, cobaltous nitrate, cobaltous chloride, cobalt acetylacetonate, cobalt naphthenate, and cobalt salicylate. Cobalt may be added in an amount of up to 100 ppm, more preferably up to 90 ppm. As described below, the cobalt may function as both a catalytic material and as a colorant. As a colorant, cobalt is generally added to the reaction process after a direct esterification or ester interchange reaction. As cobalt is generally used as a colorant, the amount of cobalt is not considered when calculating the total amount of catalytic material.

In some embodiments antimony may be employed, however, it is preferred that the catalysts not contain antimony. Indeed, it is preferred that the copolyesteramides of the invention, and the fibers and binder fibers formed therefrom, do not contain any antimony catalytic materials. When used, however, suitable antimony compounds include, but are not limited to, antimonate esters of inorganic acids, antimony oxide, antimony alkoxides such as antimony isopropoxide, antimony halide, such as antimony chloride, antimony bromide and antimony fluoride, sodium or potassium antimonate, antimony carboxylates, such as antimony acetate and antimony glycolate or mixtures thereof. Preferably the antimony component is an antimony glycolate or an antimony oxide. Antimony is generally added after the ester interchange or a direct esterification reaction. When the copolyesteramide is used to form binder fibers, antimony may be omitted from the catalyst system due to deposit buildup on the spinnerette face caused by the presence of an antimony containing catalyst.

While less preferred, calcium, gallium and silicon catalytic materials may be used in the catalyst system. Examples of suitable calcium compounds include, but are not limited to, calcium acetate, calcium glycoxide, and calcium phosphate monohydrate. Examples of suitable gallium catalytic materials include, but are not limited to, gallium chloride, gallium nitrate hydrate, gallium oxide, gallium lactate and gallium phosphide. Examples of suitable silicon catalytic materials include, but are not limited to, silicon acetate and tetraethyl orthosilicate. Germanium catalytic materials include, but are not limited to oxides, organic salts and in particular glycolates of germanium.

A preferred ester interchange catalyst system for reacting dicarboxylic acid component esters with glycols and amines contains titanium, manganese, and optionally cobalt, materials. In the ester interchange catalyst system (amide formation catalyst system), the titanium is present in an amount ranging from 10 to 35 ppm, preferably 10 to 25 ppm and the manganese is present in an amount ranging from 30 to 70 ppm. Additionally, in another embodiment of the ester interchange catalyst system, the total amount of catalytic materials in the ester interchange catalyst system is less than or equal to 125 ppm, preferably less than 100 ppm, more preferably less than 80 ppm and most preferably less than 70 ppm. A preferred ester interchange catalyst system is typically used in combination with a catalytic inhibitor comprising 40 to 90 ppm phosphorus; and a colorant in an effective amount, for example, 2 to 10 ppm of a blue and/or red substituted anthraquinone dye. Generally, the preferred ester interchange catalyst system (amide formation catalyst system) is substantially free of zinc catalytic materials, more preferably contains less than 5 ppm zinc catalytic materials and most preferably is free of zinc catalytic materials. Additionally, when binder fibers are desired, the preferred ester interchange catalyst system (amide formation catalyst system) is substantially free of antimony catalytic materials, more preferably contains less than 5 ppm antimony catalytic materials and most preferably is free of antimony catalytic materials.

### Catalytic Inhibitor

To stabilize the effects of the catalyst system and to promote efficiency of zinc, manganese and cobalt catalytic materials, it is desirable to add a phosphorus catalytic inhibitor to the reaction process after an ester interchange or direct esterification reaction but prior to conducting the polycondensation reaction step. Typically, phosphorus is added in the form of a phosphate, such as phosphoric acid or an organic phosphate ester in an amount ranging from 40 to 90 ppm and more preferably ranging from 60 to 75 ppm. Suitable phosphate esters for use in this invention include, but are not limited to, ethyl acid phosphate, diethyl acid phosphate, triethyl phosphate, arylalkyl phosphates and tris-2-ethylhexyl phosphate. One useful phosphate catalytic inhibitor is sold under the Merpol® A tradename which is commercially available from Du Pont de Nemours of Wilmington, Delaware.

### Colorants

In forming the copolyesters of the invention, colorants, sometimes referred to as toners, may be added to impart a desired neutral hue and/or brightness to the resulting copolyesteramide. When colored copolyesteramides are desired, pigments or colorants may be included in the reaction mixture during the reaction of the glycol component, the dicarboxylic acid component and the amine component or they may be melt blended with the preformed copolyesteramide. A preferred method of including colorants is to copolymerize a thermally stable organic colorant having reactive groups such that the colorant is incorporated into the copolyesteramide to improve the hue of the copolyesteramide. For example, colorants such as dyes possessing reactive hydroxyl and/or carboxyl groups, including, but not limited to, blue and red substituted anthraquinones, may be copolymerized into the polymer chain. Colorants and dyes are described in detail in U.S. Patents 4,521,556, 4,740,581, 4,749,772, 4,749,773, 4,749,774, 4,950,732, 5,252,699, 5,384,377,5,372,864 ' 5,340,910 and 5,681,918.

When dyes are employed as colorants, they may be added to the copolyester amide reaction process after an ester interchange or direct esterification reaction. Furthermore, when a dye or dye mixture is employed as the toner colorant for the copolyesteramide, it is preferred that the total amount of dye is less than 10 ppm. Additionally, in a preferred embodiment of the invention, the colorant is free of cobalt, *i*.*e*., the colorant employed produces the desired color in the absence of cobalt.

Alternatively, inorganic pigments, such as titanium dioxide and cobalt containing materials, may be added to the reaction. Advantageously when a catalyst material contains cobalt, the cobalt may also act as a colorant. Care must be taken to control the amount of cobalt in order to avoid opacity and dinginess in the copolyesteramides of the invention. To control the amount of opacity and dinginess, cobalt may be employed in an amount ranging up to 90 ppm.

### Copolyesteramides of the Invention

The copolyesteramide of the invention is formed such that the resulting copolyesteramides have excellent thermoplastic flow and bonding capability. Typically, the inherent viscosities of from 0.36 to 0.7 dl/g when employing greater than 10 mole % isophthalic acid, anhydride, acid chloride or ester thereof and from 0.36 to 0.58 dl/g when employing less than 10% isophthalic acid or acid, anhydride, acid chloride or ester thereof.

When the dicarboxylic acid component contains greater than 10 mole % isophthalic acid, anhydride, acid chloride or ester thereof the copolyesteramides of the invention have an inherent viscosity, I.V., ranging from 0.36 to 0.7, however, for binders fiber use, the copolyesteramide has preferably an I.V. ranging from 0.40 to 0.66, even more preferably 0.40 to 0.58 and most preferably 0.40 to 0.52.

When the dicarboxylic acid component contains less than 10 mole % isophthalic acid, anhydride, acid chloride or ester thereof the copolyesteramides of the invention have an inherent viscosity, I.V., ranging from 0.36 to 0.58. Preferably such copolyesteramides of the invention have an I.V. ranging from 0.38 to 0.58, more preferably 0.4 to 0.53, more preferably 0.40 to 0.51.

The I.V. of the copolyesteramides of the invention may be determined by measuring the I.V. at 25 °C using 0.5 g polymer per 100 mL of a solvent consisting of 60% by weight phenol and 40% by weight tetrachloroethane. The basic method of determining the I.V. of a copolyester is set forth in ASTM D-2857-70. The copolyesteramides produced with the lower I.V. values possess excellent color as they are clearer than previous copolyesters and may accept dyes more easily than higher I.V. copolyesters. Furthermore, low I.V. copolyesteramides are more easily dyed at lower temperatures and typically more easily printed than similar higher I.V. copolyesters. Additionally, since the copolyesteramides of the invention may have low I.V. values, the production rates of the copolyesters are quite rapid.

The copolyesteramides of the invention, especially low I.V. copolyesteramides, are capable of bonding activation at lower temperatures and have improved melt flow at lower temperatures than previous copolyesters, as measured by the Kayeness instrument, which is similar to the Tinius Olsen Indexer. This improved melt flow may beneficially result in stronger bonds at lower temperatures or shorter exposures and allows for higher manufacturing speeds in the nonwoven bonding activation step. The use of lower bonding temperatures aids in minimizing detrimental effects to higher melting point fibers when they are blended with the polyesters of the invention. For "ample, the use of lower bonding temperatures aids in the reduction of discoloration, shrinkage, loss of crimp and resiliency, change of tactile aesthetics, less volatilization and smoking of fiber finishes.

The polymerization of the dicarboxylic- acid component, the glycol component and the amine compound may be controlled to form either crystalline or amorphous polyethylene terephthalate copolyesteramides with glass transition temperatures similar or slightly lower than that of polyethylene terephthalate. The selection and amount of the dicarboxylic acid components and the glycol components will generally determine if the resulting copolyester is amorphous or crystalline. As is known in the art, amorphous polymers generally have higher clarity and are not opaque like many crystalline polymers. Therefore, while some of the 1,3- or 1,4-cyclohexanedimethanol and isophthalic acid levels employed may form crystalline copolyesteramides, the superior clarity of amorphous copolyesteramides provides some distinct advantages.

Methods for determining the degree of crystallinity are known in the art, for example, differential scanning calorimetry (DSC), density gradient tubes, and x-ray diffraction techniques. Methods for determining crystallinity are discussed in U.S. Patent 5,643,991.

Although any method known in the art would be acceptable to determine the degree of crystallinity, the differential scanning calorimetry method is preferred. For DSC analysis, a sample is heated and the temperature is monitored. A crystallization transition and/or crystalline melting transition is observed for upon heating a crystalline material. A crystalline polymer will have a well defined crystalline melting peak and temperature. In contrast, an amorphous material will have no crystallization or crystalline melting transition., *i*.*e*., no definite melting point. The degree of crystallinity is generally determined by measuring the area under the endotherm peak.

Generally, a lower I.V. copolyesteramide will have a lower extrusion temperature. Hence, copolyesteramides of the invention may advantageously be melt spun into fibers at a lower temperature. For example an isophthalic copolyesteramide of the invention with an I.V. of 0.47 may be melt spun at a temperature of approximately 235 °C whereas a similar nonisophthalic containing copolyester with an I.V. of 0.6 to 0.7 generally requires fiber spinning at a temperature of 275-285 °C. Typically, a copolyesteramide of the invention is melt spun at a temperature of less than about 265 °C, in some cases as low as about 235°C. These copolyesteramides can be melt spun through a spinnerette with about 332 holes and a hole size of about 0.55 mm. Generally, the melt spinning pressures will vary from 6.9 to 13.8 MPa (1000 psig to 2000 psig.).

Typically, the clarity and color (hue) of the copolyesteramides may be evaluated using a standard spectrocolorimeter. For example, a suitable spectrocolorimeter for evaluating the clarity and color of the copolyesteramide is a HunterLab UltraScan which is commercially available from HunterLab of Reston, Virginia. Through the use of a HunterLab UltraScan spectrocolorimeter, the clarity and color, *i*.*e*., yellowness and/or blueness may be quantified. The use of a HunterLab UltraScan spectrocolorimeter for evaluating and quantifying the color and clarity of a copolyester is described in U.S. Patent 5,681,918. When using the HunterLab UltraScan an L* value indicates the level of clarity with higher L* values representing higher levels of clarity. The level of yellowness and/or blueness is quantified as a b* value with 0.0 representing neutral, whereas values above 0.0 indicate levels of yellowness and values below 0.0 indicate the level of blueness in the copolyester. The copolyesteramides of the invention typically have an L* value of more than about 65 and a b* value varying from between about -2.5 to about +2.5.

### Products Formed from Copolyesteramide of the Invention

The copolyesteramides of the invention may be used to form an article of manufacture or be used as an additive, such as a compounding additive concentrate or master batch for another polymer system. In addition, binder fibers and other articles may be formed with the copolyesteramides that include, but are not limited to, automotive and structural preforms containing glass, polyester or other fibers, molded parts, sheeting and extruded films and fibers. The inventive copolyesteramides may be part of the articles to be formed or may form the entire article.

Conventional additives may be added to the copolyesteramides of the invention, depending upon the desired end use of the copolyesteramide. Suitable additives for the copolyesteramides are described in detail in U.S. Patents 5,608,031 and 5,773,554.

Typical additives for the polyesters (polyesteramides) include pigments, antioxidants, stabilizers, flame retardants, mold release agents, nucleating agents, tougheners, epoxy compounds, impact modifiers, adhesion promoters, conducting or antistatic agents, wetting agents, liquid repellent agents, free radical stabilizers, other surface modifiers, lubricants, viscosity modifiers, dye promoters and other processing agents.

A preferred article of the invention is a fiber. The fiber may be prepared in any desired length known in the art and generally in the form of a continuous filament or staple fiber. Fibers may be made from the copolyesteramides of the invention through any conventional means available including, but not limited to, melt spinning into fibers or directly into fabrics, the latter including spunbond and melt blown nonwovens. Depending upon the end use, any desired denier may be formed with the fibers employing copolyesteramides of the invention, including fibers having a denier value ranging from microdenier to 50 denier, preferably up to 20 denier, most preferably 1.5 to 15 denier.

Fibers formed by extruding and spinning the inventive copolyesteramides are easier to dye and are deeper dyeing as compared to polyethylene terephthalate homopolymers when employing the same aqueous dyeing conditions. Indeed, dyeing of the inventive copolyesteramides to a deeper depth of shade is possible when employing similar dyeing conditions. Conversely, the same depths of shade can be achieved with lower dyeing costs as compared to the dyeing of polyethylene terephthalate homopolymers.

The copolyesteramides may be used to form fibers, such as binder fibers, in any desired configuration known in the art. The copolyesteramides of the invention are preferably binder fibers having the form of, or incorporated into a fibrous structure. A major advantage of binder fibers is that bonded products containing the binder fibers can be obtained by applying heat, radio frequencies or ultrasonic frequencies to a web or unbonded batt of filaments. Upon activation the copolyesteramide softens and flows and upon cooling forms a solid bond with neighboring fibers. Indeed, the copolyesteramides of the invention are particularly suited for use as binder fibers as the copolyesteramides possess a lower I.V. which allows better flow and softening properties at lower temperatures. Hence, improved bonding of the binder fiber is possible at lower temperatures than previously known binder fibers for nonwoven fabrics when employing binder fibers containing the copolyesteramides of the invention. Indeed, the binder fibers formed from the copolyesteramides of the invention are particularly suited for bonding to polyester, acrylic, nylon, glass, cellulosic fibers, such as cotton and pulp-based fibers, and scoured wool. Typically, the binder fibers formed with the copolyesteramides of the invention will have deniers of 1.5 to 20. However, other fibrous forms such as melt blown webs or spunbonded materials may have microdenier sizes.

The binder fibers of the invention may be in the form of unicomponent or bicomponent binder fibers or other multicomponent forms. For example, tricomponent fibers are also a possibility, utilizing a variety of polymers and polymer variants, sometimes with the intermediate layer being a tie-layer to promote interfacial adhesion. The tie-layer can be the polyesteramide of the invention or blends of this polyesteramide with other polymers. Similarly, the polyesteramide of this invention can be used as a. tie-layer in laminating and extrusion coating.

Bicomponent binder fibers may have a sheath/core, side by side, or other configuration known in the art. For example, shaped binder fibers may be formed with the cross-sectional legs capped with binder materials during extrusion. The process of preparing and bonding a low melt temperature bicomponent binder fiber is described in detail in US Patent 3,589,956. In a bicomponent fiber of the invention, the copolyesteramides of this invention will be present in amounts of 10 to 75 weight % of the bicomponent fiber. The other component may be from a wide range of other polymeric materials including, but not limited to polyesters such as polyethylene terephthalate, polycyclohexylenedimethylene terephthalate, polytrimethylene terephthalate, polybutylene terephthalate and polylactic acid based polymers or mixtures thereof. Bicomponent binder fibers may be, blended with other fibers or used alone to make nonwoven fabrics and high loft battings having various properties. Generally, bicomponent binder fibers contain a polymer having a high melting point to ensure structural integrity during the bonding process and a lower melting or amorphous polymer to bond the matrix in nonwoven fabrics. Alternatively, economics may dictate that a much less expensive core material be used.

Binder fibers from this invention are readily blended with a wide range of other fibers and subsequently heat or energy activated to provide nonwoven fabrics having good integrity and strength. For example, other fibers in the blends could include, but are not limited to polyester, acrylic, nylon, glass, cellulosic (cotton, pulp-based fibers, cellulose ester fibers etc.) and other similar synthetic and natural fibers. Incorporation in nonwovens can also aid lamination to other fabrics, films and some metallic surfaces. The amount of binder fiber in the nonwoven blend will generally be in the range of 5 to 30 weight although amounts as little as 2 weight % can also be used. In some instances fabrics are formed using 100% binder fibers.

Another fibrous structure which may be made with the copolyesteramides of the invention is a fiber which is formed by melt blending less than 50% of the copolyesteramide with a polyolefin, a functionalized polyolefin or a polyester other than the inventive copolyesteramide. When melt blending, suitable compatibilizers may be employed for their desired effects. The melt blended copolyesteramide/polyolefin or melt blended copolyesteramide/copolyester may be spun as a fiber to form a fibrous structure. This melt blending allows polyolefins to be spun in a natural state and dyed in separate subsequent operations, something which cannot be satisfactorily achieved with unmodified polypropylene.

The copolyesteramides may also be used as an additive in polyethylene terephthalate (PET), polytrimethylene terephthalate (PTT), polybutylene terephthalate (PBT), polycyclohexylenedimethylene terephthalate (PCT) or polyethylene napthalenedicarboxylate (PEN) and other polyesters to enhance fiber disperse dye uptake and make it deeper dyeable, thus improving the depth of shading with the same amount of dye under same conditions employed for dyeing polyesters other than those of the invention, for example a polyethylene terephthalate polymer having the same I.V. This technique can also enhance printability and improve wetting as compared to a polyethylene terephthalate polymer having the same I.V.

The fibrous structures of the invention are particularly useful for processing into a wide variety of nonwoven, knitted and tufted textiles for a variety of application, but are particularly suitable for the manufacture of bonded, nonwoven and textiles, either quilted or unquilted, which may be activated by a variety of means. They are also suitable for use in making a wide variety of products including, but not limited to, high loft battings, needlepunched fabrics, flat nonwovens, hydroentangled fabrics, stitch-bonded fabric (to minimize pining), wet-laid non-woven fabrics and paper, filter media, face masks, scatter rugs, cotton carpeting, cellulosic insulation, absorbent products, fiberglass composites, pillow fillings, fillings for sleeping bags, cushions, quilts, comforters, coverlets, mattresses, mattress pads, mattress covers, furniture and auto upholstery, bedspreads, pile fabrics for industrial and apparel uses, blankets, women's robes, sport jackets, car coats, interlinings, outerwear, floor covering materials, tiles, carpets, bath mats, foot and handwear, ribbons, decorative yams and fabrics, and molded articles.

Another suitable use for the copolyesteramides of the invention is as a compounding carrier material. For example, the copolyesteramide of the invention may be mixed with additives, including colorants, to form a concentrate or masterbatch where the polyesteramide is a carrier material. This concentrate or masterbatch may be combined with another polymer in a later process to provide color, opacity, flame retardancy or other beneficial properties. Copolyesteramides of the invention will accept higher levels of additives, such as pigments, than polyethylene terephthalates of similar inherent viscosities. The copolyesteramide may be blended or mixed by any suitable technology known in the art.

The copolyesteramides of the invention may be blended with a wide range of other polymers as a component of the masterbatches but not the carrier material. Such other polymers include other polyesters, polyamides, cellulose esters, polycarbonates, polyolefins and the like. Such masterbatches may subsequently be blended with more of the same or different polymers to be used in fibers, molded articles, sheeting or films to alter or to enhance properties. Copolyesteramides of the invention will accept higher levels of additives, such as pigments, than polyethylene terephthalates of similar inherent viscosities. The copolyesteramide may be blended or mixed by any suitable technology known in the art. The copolyesteramides of the invention may be in the form of an additive which is a melt blend of the inventive copolyesteramides and a first polymer, wherein the additive when blended with a second polymer, which may be the same or different than the first polymer, is capable of forming a fiber. Thus, any fiber which contains, in whole or in part, the copolyesteramides of the invention, is encompassed by this invention.

The following examples are intended to illustrate scope of the present invention. Although the examples relate to copolyesters, the skilled reader will acknowledge that the inventive copolyesteramides can be prepared and used analogously.

### EXAMPLES

### Example 1 Low Catalyst, Low I.V. Copolyesters for Binder Fibers

A comparison was made between copolyesters formed with an I.V. of 0.59 and a low IN. of 0.47. The copolyester formed with the higher I.V. of 0.59 was made using a catalyst system with a high concentration of catalytic materials. In contrast, the copolyesters formed with the low I.V. of 0.47 were formed using a catalyst system having a low concentration of catalytic materials.

A low I.V. copolyester containing about 31 mole % 1,4 cyclohexanedimethanol and about 69 mole % ethylene glycol was prepared from 1,4 cyclohexanedimethanol, ethylene glycol and dimethyl terephthalate. The reaction was conducted with an excess of the glycol component. The reaction proceeded by first conducting an ester interchange reaction step followed by a polycondensation reaction step. The ester interchange reaction was conducted at a temperature ranging from 190 °C to 240 °C and a pressure of 15 to 40 psig in the presence of a catalyst system containing 16 ppm Ti (as tetraisopropyl titanate) and 46 ppm Mn (as manganese acetate). The product of the ester interchange reaction was subjected to a polycondensation reaction step where the temperature started at from 250 °C to 260 °C and ended at 269 °C to 282 °C. Likewise the pressure for the polycondensation reaction started at 9.9 MPa to 26.7 MPa (75 to 200 torr) and finished at 39.9 to 333 kPa (0.3 to 2.5 torr). Prior to commencing a polycondensation step, less than about 10 ppm of a mixture of blue and red anthraquinone dyes was added to the catalyst system and a catalytic inhibitor comprising Merpol ® A from Du Pont was added in an amount of about 70 ppm P.

The high I.V. copolyester, I.V. 0.59, was prepared to have the same composition as the low I.V. copolyesters. As with the low I.V. copolyesters, the reaction proceeded by first conducting an ester interchange reaction step followed by a polycondensation reaction step. The ester interchange reaction was conducted at a temperature ranging from 190 °C to 240 °C and a pressure of 104 to 276 kPa (15 to 40 psig) in the presence of a catalyst system containing 56 ppm Ti (as tetraisopropyl titanate) and 46 ppm Mn (as manganese acetate). Prior to commencing a polycondensation step, 56 ppm cobalt acetate was added to the catalyst system and a catalytic inhibitor comprising Merpol ® A from Du Pont was added to provide 79 ppm P. The product of the ester interchange reaction was subjected to a polycondensation reaction step where the temperature started at from 250°C to 260 °C and ended at 275 °C to 285 °C. The pressure for the polycondensation reaction started at 9.9 MPa to 26.7 MPa (75 to 200 torr) and finished at 39.9 to 266 kPa (0.3 to 2.0 torr). The use of a longer reaction time was required to obtain the higher I.V. copolyester.

A HunterLab UltraScan spectrocolorimeter was employed for evaluating and quantifying the color and clarity of the two copolyesters:

**TABLE I**

| IV | L* Color | b* Color |
|---|---|---|
| 0.47 | 69-72 | -0.5-+0.5 |
| 0.59 | 64.2 | 2.7 |

As evident from Table 1, the lower I.V. copolyesters formed with the low catalyst concentration systems possessed superior clarity and color.

### Example 2 Bond Strengths for Binder Fibers Made with Low and High I.V. Copolyesters

Copolyester pellets having an I.V of 0.47 and containing about 31 mole % 1,4 cyclohexanedimethanol and about 69 mole % ethylene glycol were prepared from 1,4 cyclohexanedimethanol, ethylene glycol and dimethyl terephthalate under reaction conditions similar to that of example 1. The catalyst system used to form the low I.V. pellets contained 35 ppm Ti (as tetraiospropyl titanate) and 46 ppm Mn (as manganese acetate), 50 ppm cobalt acetate while the catalytic inhibitor comprised Merpol ® A from Du Pont in an amount of 70 ppm P.

The 0.47 I.V. copolyester pellets were dried in a rotary dryer at 65 °C for 4 hours. Unicomponent binder fibers were formed from the low and high I.V. copolyester pellets by melt extruding the pellets into multifilament fibers of 9 denier/filament. The filaments were formed using a spinnerette having 332 holes (0.55 mm orifices), a melt temperature of 233 °C and a take-up speed of 100 m/m. The copolyester pellets of I.V. 0.59 from example 1, were likewise formed into unicomponent binder fibers, except that the pellets were spun at a melt temperature of 275 °C.

The as-spun fibers were subsequently drafted in a 2-stage process (70 °C water, followed by a heated chamber), 3:1 total draft ratio, and stuffer box crimped to 7 crimps/25.4 mm (7 crimps/inch) and an 88 degree crimp angle. The resulting 3 denier filament fiber was then lubricated with a water-based finish and oven dried.

Both the low I.V. 0.49 and high I.V. 0.59 copolyester unicomponent binder fibers were combined with 75% polyethylene terephthalate fibers to form 0.83 N/yd² (3 oz/yd²) intimately blended carded nonwoven fabrics. The nonwoven fabrics were activated and subjected to bonding strength testing by bonding the intimately blended nonwoven on a press, with the upper and lower heated plates contacting the nonwoven with pressure. Activation was 30 seconds at temperatures ranging from 93 to 135 °C (200 to 275 °F). 25 mm (One-inch) wide strips were used to obtain the Instron tensiles at a 125 mm (5-inch) gauge length. The results of the bond strength tests are presented in detail in Table 2 below.

**TABLE 2**

| **PET/Uni-Component Nonwoven Samples** | | | |
|---|---|---|---|
| Nonwoven Fabric w/Binder Fiber from 0.47 I.V. Copolyester | | | |
| Activation Temp. °C (°F) | Avg. Break Force, g | Avg. Elongation, % | Avg. Modulus, g/d |
| 93 (200) | 333 | 12.0 | 12,637 |
| 107 (225) | 820 | 4.1 | 61,637 |
| 121 (250) | 2899 | 15.3 | 116,625 |
| 135 (275) | 4837 | 22.6 | 97,984 |

| Nonwoven Fabric w/Binder Fiber from 0.59 I.V. Copolyester | | | |
|---|---|---|---|
| Activation Temp. °C (°F) | Avg. Break Force, g | Avg. Elongation, % | Avg. Modulus, g/d |
| 93 (200) | 35 | 18.5 | 481 |
| 107 (225) | 196 | 5.0 | 9,273 |
| 121 (250) | 617 | 6.9 | 29,340 |
| 135 (275) | 2366 | 15.4 | 71,949 |

Similar testing was also conducted with a coextruded sheath/core bicomponent binder fiber, having a 35% .41 I.V. copolyester binder sheath and a 65% polyethylene terephthalate core having about 4 denier. Similar results were obtained.

### Example 3 Bond Strengths Testing of Binder Fibers

Unicomponent binder fibers were formed from a terephthalate copolyester containing 31 mole % 1,4 cyclohexanedimethanol, 69% ethylene glycol and a dicarboxylic acid component containing 100 mole % dimethyl terephthalate.

A first unicomponent binder fiber was formed from a first copolyester which was formed in the presence of a catalyst system having a low level of catalytic materials. For the first copolyester, an ester interchange reaction step occurred in the presence of a catalyst system containing 35 ppm Ti (as tetraiospropyl titanate) and 46 ppm Mn (as manganese acetate). Prior to commencing a polycondensation step, 50 ppm Co (as cobalt acetate) was added to the catalyst system and a catalytic inhibitor comprising Merpol ® A from Du Pont was added in an amount of 70 ppm P. The first copolyester was formed with an I.V. of 0.47 and possessed a denier of about 3.

A second unicomponent binder fiber was formed from the copolyester pellets of example 1 having an I.V. of 0.47. The 0.47 I.V. copolyester pellets of example I were formed in the presence of a lower concentration catalyst system, 16 ppm Ti and 46 ppm Mn. The second unicomponent binder fiber possessed a denier of about 3.

The first and second unicomponent binder fibers were combined with polyethylene terephthalate fibers having a denier of 6 to form a nonwoven fabric. The binder fiber comprised 25% of the nonwoven fabric with the polyethylene terephthalate fibers comprising the other 75%. The nonwoven web containing the binder fibers activated and subjected to bonding strength testing by the procedures described in Example 2 above, except that the upper and lower plates were gapped to allow touch contact, without any pressure registering on the pressure gauge. The results of the bond strength tests are set forth below in Table 3.

**TABLE 3**

| Nonwoven Fabric w/Binder Fiber from First Copolyester | | | |
|---|---|---|---|
| Activation Temp. °C (°F) | Avg. Break Force, g | Avg. Elongation, % | Avg. Modulus, g/d |
| 149(300) | 2,591 | 18 | 31,636 |
| 163 (325) | 2,476 | 26 | 17,340 |

| Nonwoven Fabric w/Binder Fiber from Second Copolyester | | | |
|---|---|---|---|
| Activation Temp. °C (°F) | Avg. Break Force, g | Avg. Elongation, % | Avg. Modulus, g/d |
| 149 (300) | 2,434 | 17 | 45,586 |
| 163 (325) | 2,661 | 21 | 27,966 |

As shown by the above Table 3, the use of differing levels of catalyst materials within the scope of the invention did not appear to significantly affect the binding strength of the binder fibers made with similar inherent viscosities.

### Example 4

Unicomponent binder fibers were formed from copolyesters containing 31 mole % 1,4 cyclohexanedimethanol, 69% ethylene glycol and a dicarboxylic acid component containing 100 mole % dimethyl terephthalate. A first unicomponent binder fiber was made from the low I.V., lower catalyst second copolyester of example 3. A second unicomponent binder fiber was made from the copolyester of example I having an I.V. of 0.59. Both the first and second unicomponent binder fibers were made by the process described in example 2. Intimately blended carded nonwoven fabrics were made from the first and second unicomponent binder fibers by the process described in example 2. Bond strength testing was performed similar to that described in example 3. The results of the bonds strength testing are presented below in table 4.

**TABLE 4**

| Nonwoven Fabric w/Binder Fiber from 0.47 I.V. Copolyester | | | |
|---|---|---|---|
| Activation Temp. °C (°F) | Avg. Break Force, g | Avg. Elongation, % | Avg. Modulus, g/d |
| 107 (225) | 133 | 7 | 5,841 |
| 121 (250) | 393 | 6 | 15,827 |
| 135 (275) | 883 | 12 | 29,362 |
| 149 (300) | 2434 | 17 | 45,586 |
| 163 (325) | 2661 | 21 | 27,966 |

| Nonwoven Fabric w/Binder Fiber from 0.59 I.V. Copolyester | | | |
|---|---|---|---|
| Activation Temp. °C (°F) | Avg. Break Force, g | Avg. Elongation, % | Avg. Modulus, g/d |
| 107 (225) | 45 | 20 | 652 |
| 121 (250) | 219 | 5 | 7,947 |
| 135(275) | 590 | 12 | 15,372 |
| 149 (300) | 1,748 | 22 | 20,433 |
| 163 (325) | 2,640 | 29 | 17,902 |

As shown by table 4, the binder fibers formed with the lower I.V. of 0.47 possessed higher bond strength at lower activation temperatures.

### Example 5 Low Viscosity PET Copolyester Containing 30/70 cis/trans mixture of 1,4-cyclohexanedimethanol.

A polyethylene terephthalate copolyester was formed from a glycol component and a dicarboxylic acid component. The glycol component contained 31 mole % of a 30/70 cis/trans mixture of 1,4-cyclohexanedimethanol, and 69 mole % ethylene glycol. The dicarboxylic acid component comprised 100 mole % dimethyl terephthalate. The polyethylene terephthalate copolyester was prepared by a melt phase polycondensation process using a catalyst system containing 32 ppm Ti, 46 ppm Mn, 50 ppm Co and 70 ppm P. The polyethylene terephthalate copolyester formed had an I.V. of 0.50.

Pellets of this copolyester were dried at 60°C for 2 hours and then melt extruded into multifilament fibers of 9 denier/filament using a spinnerette having 332 holes (0.55 mm orifice) at a take-up speed of 1000 m/m, a melt spinning temperature of 249 °C and an extrusion rate of 19 kg per hour (43 pounds per hour). A velocity of 4 m³ per minute (145 cubic feet per minute) was used to quench the filaments during extrusion. The as-spun fibers were subsequently drafted in a one-stage drawing process using a 68°C water bath. The fibers were stuffer box crimped to provide 7.5 crimpes per 25 mm 7.5 crimpes per inch) and a crimp angle of 90 degrees using a clapper setting of 65 kPa (9.5 psi) with no live steam. The fiber was dried in a relaxed state at 60°C for 2 minutes. The resultant staple fiber was determined to have 3 denier per filament.

Good results were similarly achieved when the copolyester was not dried prior to the spinning operation.

Fibers were also readily produced from PET copolyesters containing 22 mole % CHDM (I.V. 0.40) or 45 mole % CHDM (I.V. 0.49).

### Example 6 Preparation of Nonwoven Web

A 3 denier per filament, unicomponent binder fiber from Example 5 was blended with polyethylene terephthalate staple fibers (2 1/4 denier per filament) to provide a blend containing 20 weight % binder fiber. A 0.34 N/yd² (1 1/4 oz/yd²) intimately blended nonwoven web was formed by carding. The nonwoven web was bonded by conveying the web through an infrared oven, followed by hot nipping (80°C). Good machine and cross direction tensile strength and drapeability were obtained.

Good bonding was also obtained by passing the web from the card through an air flow-through oven at 150°C for a two minute dwell time.

Binder fibers from the compositions of this invention were determined to be ultrasonic and radio frequency activatable.

### Example 7 Preparation of a Brightly Colored Nonwoven Web

A 0.42 N/yd² (1 ½ oz/yd²) nonwoven web fabric was produced similar to Example 6; however, the matrix polyester was colored red. The clair, non-opaque bonds provided by the unicomponent binder fiber from Example 5 minimally affected the brightness of the shade. This is an advantage over isophthalic modified polyethylene terephthalate copolyester binder fibers which do not contain cyclohexanedimethanol which generally are more opaque and often contribute to a frosty, hazy looking appearance on dyed goods.

### Example 8 Sheath/Core Bicomponent Fiber

A 50/50 sheath/core bicomponent fiber was made using polyethylene terephthalate homopolymer (I.V. 0.54) as the core and a polyethylene terephthalate copolyester similar to that in Example 5 (I.V. 0.41) as the sheath. The bicomponent fiber was formed as follows: Crystallized, dried pellets of PET were melted in an extruder and fed as the core at a melt temperature of 295°C. Dried pellets ofPET copolyester were transported to the feed hopper of the extruder feeding the sheath melt stream. The sheath stream was extruded at a melt temperature of 225°C. The molten streams are coextruded through a spinnerette having a sheath/core hole configuration at metering rates adjusted to produce fibers having a 50% copolyester sheath/50% PET core. A similar 35/65 sheath/core bicomponent fiber was also produced in filament and staple form. The fibers were drawn with draw roll speeds to produce 4 denier per filament fibers which were then crimped and cut into staple fibers (51 mm long).

These bicomponent binder fibers are useful in making nonwoven fabrics and high loft battings in combinations with polyethylene terephthalate and/or other matrix staple fibers. These binder fibers can also be used in 100% form.

### Example 9 Low Viscosity PET Copolyester Containing Isophthalic Acid and 30/70 cis/trans mixture of 1,4-cyclohexanedimethanol

A polyethylene terephthalate (PET) copolyester containing 20 mole % isophthalic acid (IPA) and 20 mole % 1,4-cyclohexanedimethanol (CHDM) is prepared in a melt phase polycondensation using a catalyst system containing 25 ppm Ti, 40 ppm Mn, 55 ppm Co and 60 ppm P. This copolyester has an I.V. of 0.55.

Pellets of this copolyester are dried at 50°C for 2 hours and then are melt extruded into multifilament fibers of 9 denier/filament using a spinnerette having 332 holes (0.55 mm orifice) at a take-up speed of 1000 m/m, a melt temperature of 265 °C and an extrusion rate of 19 kg per hour (43 pounds per hour). An air flow of 4 m³ per minute (45 cubic feet per minute) is used to quench the filaments during extrusion. The as-spun fibers are subsequently drafted in a 3:1 draft ratio and continue in a one stage drawing process a 68 °C water bath and steam chest into which 3,4 kPa (0.5 psi) life steam is injected. The fibers are stuffer box crimped to provide 7 crimps per 25 mm (7 crimps per inch) and a crimp angle of 95 degrees using a clapper setting of 65 kPa (9.5 psi) with no steam. The fiber is dried in a relaxed state at 60 °C for 2 minutes. The resultant staple fiber is 3.2 denier per filament.

The as-spun, undrawn form of the above fiber is also an effective binder fiber. For example, a 4 d/f as-spun binder fiber is especially suitable for lightweight nonwovens where low shrinkage is desirable. Similarly, beneficial results are achieved when the copolyester pellets are not dried prior to the spinning operation.

Fibers can also be readily produced from PET copolyesters formed with 12 mole % IPA and 28 mole % CHDM (I.V. 0.48) or 30 mole % IPA and 8 mole % CHDM (I.V. 0.60).

### Example 10 Preparation of Nonwoven Web

A 3 denier per filament, unicomponent binder fiber from Example 1 is blended with PET staple fibers (2 1/4 denier per filament) to provide a blend containing 20 weight % binder fiber. The 0.34 N/yd² (1 1/4 oz/yd²) intimately blended nonwoven web is formed on a carding line. The binder fibers in the nonwoven web are activated by conveying the web through an infrared oven, followed by hot nipping (80°C) to bond the fibers to the nonwoven web. Good machine and cross direction tensile strength and drapeability are obtained. Good bonding is also obtained by passing the web from the card through an air circulating oven at 150°C for a two minute dwell time.

Binder fibers from the compositions of this invention are also radio frequency activatable. Similarly beneficial results are achieved when the binder fiber is a 1,4-cyclohexanedicarboxylic acid (PEC) copolyester containing 15 mole % isophthalic acid and 15 mole % CHDM or a naphthalenedicarboxylic acid (PEN) copolyester containing 10 mole % isophthalic acid and 25 mole % CHDM.

### Example 11 Sheath/Core Bicomponent Fiber

A 50/50 sheath/core bicomponent fiber is made using polyethylene terephthalate homopolymer (I.V. 0.54) as the core and a polyethylene terephthalate copolyester similar to that in Example 1 (I.V. 0.47) as the sheath. The bicomponent fiber is formed as follows: Crystallized, dried pellets of PET are melted in an extruder and fed as the core at a melt temperature of 288°C. Dried pellets of PET copolyester are transported to the feed hopper of the extruder feeding the sheath melt stream. The sheath stream is extruded at a melt temperature of 250°C. The molten streams are coextruded through a spinnerette having a sheath/core hole configuration at metering rates adjusted to produce fibers having a 50% copolyester sheath/50% PET core. The fibers are drawn with draw roll speeds to produce 4 denier per filament fibers. A similar 40/60 sheath/core bicomponent fiber is also produced in filament and staple form. For staple, the fibers are then crimped and cut into 38 mm lengths.

These bicomponent binder fibers are useful in making nonwovens, composites and other formed materials when incorporated or combined with polyethylene terephthalate, glass and/or other matrix fibers, fabrics or films. For some nonwoven structures, these binder fibers can also be used in 100% form.

### Example 12 Low Viscosity PET Copolyester Containing IPA and CHDM

Using the catalyst system described in Example 1, a PET copolyester containing 11 mole % IPA and 13 mole % CHDM is prepared. This copolyester has an I.V. of 0.58. Dried samples of this copolyester are melt spun using the technique described in Example 1 to provide as-spun multifilament binder fibers of 12 d/f. These fibers are drafted, crimped and cut to provide staple fibers of 3.5 d/f. These binder fibers are blended with PET fibers to form a blend containing 15 weight % binder fiber. The blend is bonded by passing it through an infrared oven as described in Example 2.

Filament fibers are also readily melt spun from the copolyester of this example to provide filaments of 6 d/f. These filaments are readily intermingled or continuously blended with glass at a 7% binder fiber level, chopped into staple or roving which is then formed into a composite structure and thermally activated.

### Example 13 Low Viscosity PET Copolyester Containing CHDM

A 0.40 I.V. copolyester containing about 31 mole % 1,4-cyclohexanedimethanol and about 69 mole % ethylene glycol was prepared from 1,4-cyclohexanedimethanol, ethylene glycol and dimethyl terephthalate. The reaction of the dicarboxylic acid component and glycol component was conducted with an excess of the glycol component. In particular, the reaction proceeded by first conducting an ester interchange reaction step followed by a polycondensation reaction step. The ester interchange was conducted at a temperature ranging from 190 °C to 240 °C and at a pressure of 103 to 276 kPa (15 to 40 psig) in the presence of a catalyst system containing 16 ppm Ti (as tetraisopropyl titanate) and 46 ppm Mn (as manganese acetate). Prior to commencing the polycondensation step, about 10 ppm of a mixture of blue and red anthraquinone toner dyes was added to the reaction mixture and a catalytic inhibitor comprising Merpol ® A (available from DuPont) was added in the amount of about 70 ppm P. The product of the ester interchange reaction was subjected to a polycondensation reaction step where the temperature started from 245 °C to 255 °C and ended at 255 °C to 270 °C. Likewise, the pressure for the polycondensation reaction started at 9.9 MPa to 26.7 MPa (75 to 200 torr) and finished at 39.9 to 333 kPa (0.3 to 4.0 torr).

A unicomponent binder fiber was formed from the above polyester pellets. Binder fiber (6 denier, uncrimped) was into 1/4-inch (6 mm) staple fibers. The binder fiber, at 15% by weight, was blended with fluff pulp in an air laid nonwoven. The resulting 500 g/sq m nonwoven, after a through-air oven activation of the binder, exhibited significantly increased dry and wet tensile and rupture strengths, compared to the fluff pulp only controls. Similar improvements were also observed in a wet laid cellulosic nonwoven, using a 3 denier unicomponent binder fiber made from the 0.40 I.V. copolyester.

## Claims

1. A fiber comprising a copolyesteramide formed from the reaction product of:
a glycol component with a dicarboxylic acid component and an amine compound present in an amount up to 20 mole %,
wherein the glycol component comprises 1,3- or 1,4-cyclohexanedimethanol in an amount ranging from 5 to 60 mole % and ethylene glycol in an amount ranging from 40 to 95 mole %,
wherein the dicarboxylic acid component comprises at least 50 mole % of a dicarboxylic acid component which is an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof, and
wherein the copolyesteramide has an I.V. of between 0.36 to 0.58.

2. The fiber of claim 1, wherein the copolyesteramide does not contain any antimony catalytic materials.

3. The fiber of claim 1, wherein the amine compound is selected from the group consisting of aminoalcohols, aminoacids, diamines, lactams and mixtures thereof.

4. The fiber of claim 1, wherein the fiber is a bicomponent binder fiber, the bicomponent fiber comprising:
25 to 90 % by weight of a polymeric core portion; and
10 to 75 % by weight of a sheath portion comprising the reaction product of the glycol component, the dicarboxylic acid component and the amine compound.

5. The bicomponent fiber of claim 4, wherein the core portion is a polymeric material selected form the group consisting of polyethylene terephthalate, polycyclohexylenedimethylene terephthalate, polytrimethylene terephthalate, polybutylene terephthalate or mixtures thereof.

6. The fiber of claim 1, wherein the fiber is a melt blend of the polyesteramide with another polyester, a polyolefin or a functionalized polyolefin.

7. A binder fiber comprising a copolyesteramide formed from the reaction product of:
a glycol component with a dicarboxylic acid component and an amine compound present in an amount of up to 20 mole %,
wherein the glycol component comprises 1,3- or 1,4-cyclohexanedimethanol in an amount ranging from 5 to 60 mole %, ethylene glycol in an amount ranging from 40 to 95 mole %,
wherein the dicarboxylic acid component comprises at least 50 mole % of a dicarboxylic acid component which is an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof, and
wherein the copolyesteramide has an I.V. of between 0.36 to 0.58.

8. The binder fiber of claim 7, wherein the amine compound is selected from the group consisting of aminoalcohols, aminoacids, diamines, lactams and mixtures thereof.

9. The binder fiber of claim 7, wherein the dicarboxylic acid component is an ester or mixture of esters of terephthalic acid, isophthalic acid, naphthalenedicarboxylic acid or 1,3-or 1,4-cyclohexanedicarboxylic acid.

10. The binder fiber of claim 7, wherein the I.V. value of the copolyesteramide ranges from 0.40 to 0.52.

11. The binder fiber of claim 7, wherein the copolyesteramide is formed in the presence of a catalyst system comprising 10 to 35 ppm Ti, 0 to 70 ppm Mn, 0 to 90 ppm Co and in the presence of a catalytic inhibitor comprising 40 to 90 ppm P based on the weight of the copolyester.

12. The binder fiber of claim 7, wherein the copolyesteramide does not contain any antimony catalytic materials.

13. The binder fiber of claim 7, wherein the binder fiber is an unicomponent binder fiber.

14. The binder fiber of claim 7, wherein the fiber is a multicomponent binder fiber having side by side configuration.

15. The binder fiber of claim 7, wherein the fiber is a multicomponent fiber and wherein the polyester is a tie layer adhesion promoter.

16. The binder fiber of claim 7, wherein the binder fiber may be activated by heat, ultrasonic frequencies and radio frequencies.

17. The binder fiber of claim 7, wherein the binder fiber has a denier ranging from 20 to microdenier sizes and wherein the binder fiber is either a unicomponent or multicomponent binder fiber.

18. The binder fiber of claim 7, wherein the binder fiber is capable of being dyed to a deeper shade than a polyethylene terephthalate fiber having the same I.V.

19. A fiber comprising a copolyesteramide formed from the reaction product of:
a glycol component with a dicarboxylic acid component and an amine compound present in an amount of up to 20 mole %,
wherein the glycol component comprises 1,3- or 1,4-cyclohexanedimethanol in an amount ranging from 5 to 60 mole % and ethylene glycol in an amount ranging from 40 to 95 mole %,
wherein the dicarboxylic acid component comprises isophthalic acid or an anhydride, acid chloride or ester thereof in an amount ranging from greater than 10 mole % to 50 mole % and at least 50 mole % of a dicarboxylic acid component which is an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof, and
wherein the copolyesteramide has an I.V. ranging from 0.36 to 0.70.

20. The fiber of claim 19, wherein the copolyesteramide does not contain any antimony catalytic materials.

21. The fiber of claim 19, wherein the amine compound is selected from the group consisting of aminoalcohols, aminoacids, diamines, lactams and mixtures thereof.

22. The fiber of claim 19, wherein the fiber is a bicomponent binder fiber, the bicomponent binder fiber comprising:
25 to 90 % by weight of a polymeric core portion; and
10 to 75 % by weight of a sheath portion comprising the reaction product of the glycol component, the dicarboxylic acid and the amine compound.

23. The bicomponent fiber of claim 22, wherein the core portion is a polymeric material selected from the group consisting of polyethylene terephthalate, polycyclohexylenedimethylene terephthalate, polytrimethylene terephthalate, polybutylene terephthalate, polylactic acid or mixtures thereof.

24. The fiber of claim 19, wherein the fiber is a melt blend of the polyesteramide with another polyester, a polyolefin or a functionalized polyolefin.

25. A binder fiber comprising a copolyesteramide formed from the reaction product of:
a glycol component with a dicarboxylic acid component and an amine compound present in an amount of up to 20 mole %,
wherein the glycol component comprises 1,3- or 1,4-cyclohexanedimethanol in an amount ranging from 5 to 60 mole %, ethylene glycol in an amount ranging from 40 to 95 mole %,
wherein the dicarboxylic acid component comprises isophthalic acid or an anhydride, acid chloride or ester thereof in an amount ranging from greater than 10 mole % to 50 mole % and at least 50 mole % of a dicarboxylic acid component which is an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof, and
wherein the copolyesteramide has an I.V. ranging from 0.36 to 0.70.

26. The binder fiber of claim 25, wherein the amine compound is selected from the group consisting of aminoalcohols, diamines, lactams and mixtures thereof.

27. The binder fiber of claim 25, wherein the dicarboxylic acid component contains at least 50 mole % of an ester or mixture of esters of terephthalic acid, naphthalenedicarboxylic acid or 1,3- or 1,4-cyclohexanedicarboxylic acid.

28. The binder fiber of claim 25, wherein the I.V. of the copolyesteramide ranges from 0.4 to 0.66.

29. The binder fiber of claim 25, wherein the copolyesteramide is formed in the presence of a catalyst system comprising 10 to 35 ppm Ti, 0 to 70 ppm Mn, 0 to 90 ppm Co and in the presence of a catalytic inhibitor comprising 40 to 90 ppm P based on the weight of the copolyesteramide.

30. The binder of claim 25, wherein the copolyesteramide does not contain any antimony catalytic materials.

31. The binder fiber of claim 25, wherein the binder fiber is a unicomponent binder fiber.

32. The binder fiber of claim 25, wherein the fiber is a multicomponent binder fiber having side by side configuration.

33. The binder fiber of claim 25, wherein the fiber is a multicomponent fiber and wherein the polyester is a tie layer adhesion promoter.

34. The binder fiber of claim 25, wherein the binder fiber may be activated by heat, ultrasonic frequencies and radio frequencies.

35. The binder fiber of claim 25, wherein the binder fiber has a denier ranging from 20 to microdenier sizes and wherein the bicomponent fiber is either a unicomponent or multicomponent binder fiber.

36. The binder fiber of claim 25, wherein the binder fiber is capable of being dyed to a deeper shade than a polyethylene terephthalate fiber having the same I.V.

37. A copolyesteramide formed from the reaction product of:
a glycol component with a dicarboxylic acid component and an amine compound present in an amount of up to 20 mole %,
wherein the glycol component comprises 1,3- or 1,4-cyclohexanedimethanol in an amount ranging from 5 to 60 mole % and ethylene glycol in an amount ranging from 40 to 95 mole %,
wherein the dicarboxylic acid component comprises at least 50 mole % of a dicarboxylic acid component which is an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic add having 8 to 12 carbon atoms or mixtures thereof,
wherein the copolyesteramide has an I.V. ranging from 0.36 to 0.58, and
wherein the copolyesteramide is formed in the presence of a catalyst system comprising 10 to 35 ppm Ti.

38. A copolyesteramide formed from the reaction product of:
a glycol component with a dicarboxylic acid component and an amine compound present in an amount of up to 20 mole %,
wherein the glycol component comprises 1,3- or 1,4-cyclohexanedimethanol in an amount ranging from 5 to 60 mole % and ethylene glycol in an amount ranging from 40 to 95 mole %,
wherein the dicarboxylic acid component comprises isophthalic acid or an anhydride, acid chloride or ester thereof in an amount ranging from greater than 10 mole % to 50 mole % and at least 50 mole % of a dicarboxylic add component which is an acid, anhydride, acid chloride or ester of an aromatic dicarboxylic acid containing from 8 to 14 carbon atoms, an aliphatic dicarboxylic acid containing from 4 to 12 carbon atoms, a cycloaliphatic dicarboxylic acid having 8 to 12 carbon atoms or mixtures thereof,
wherein the copolyesteramide has an I.V. ranging from 0.36 to 0.7 and
wherein the copolyesteramide is formed in the presence of a catalyst system comprising 10 to 35 ppm Ti.

## Patentansprüche

1. Faser, umfassend ein Copolyesteramid, gebildet aus dem Reaktionsprodukt von:
einer Glykolkomponente mit einer Dicarbonsäurekomponente und einer Aminverbindung, vorliegend in einer Menge von bis zu 20 Mol-%,
wobei die Glykolkomponente 1,3- oder 1,4-Cyclohexandimethanol in einer Menge im Bereich von 5 bis 60 Mol-% und Ethylenglykol in einer Menge im Bereich von 40 bis 95 Mol-% umfasst;
wobei die Dicarbonsäurekomponente mindestens 50 Mol-% einer Dicarbonsäurekomponente umfasst, die ein(e) Säure, Anhydrid, Säurechlorid oder ein Ester einer aromatischen Dicarbonsäure mit 8 bis 14 Kohlenstoffatomen, einer aliphatischen Dicarbonsäure mit 4 bis 12 Kohlenstoffatomen, einer cycloaliphatischen Dicarbonsäure mit 8 bis 12 Kohlenstoffatomen oder Mischungen davon ist, und
wobei das Copolyesteramid eine I.V. zwischen 0,36 und 0,58 besitzt.

2. Faser nach Anspruch 1, wobei das Copolyesteramid nicht irgendwelche katalytische Antimon-Materialien enthält.

3. Faser nach Anspruch 1, wobei die Aminverbindung gewählt ist aus der Gruppe bestehend aus Aminoalkoholen, Aminosäuren, Diaminen, Lactamen und Mischungen davon.

4. Faser nach Anspruch 1, wobei die Faser eine Bikomponenten-Binderfaser ist, wobei die Bikomponentenfaser Folgendes umfasst:
25 bis 90 Gew.-% eines polymeren Kernteils; und
10 bis 75 Gew.-% eines Hüllenteils, umfassend ein Reaktionsprodukt der Glykolkomponente, der Dicarbonsäurekomponente und der Aminverbindung.

5. Bikomponentenfaser nach Anspruch 4, wobei der Kernteil ein polymeres Material ist, gewählt aus der Gruppe bestehend aus Polyethylenterephthalat, Polycyclohexylendimethylenterephthalat, Polytrimethylenterephthalat, Polybutylenterephthalat oder Mischungen davon.

6. Faser nach Anspruch 1, wobei die Faser eine Schmelzmischung des Polyesteramids mit einem anderen Polyester, einem Polyolefin oder einem funktionalisierten Polyolefin ist.

7. Binderfaser, umfassend ein Copolyesteramid, gebildet aus dem Reaktionsprodukt von:
einer Glykolkomponente mit einer Dicarbonsäurekomponente und einer Aminverbindung, vorliegend in einer Menge von bis zu 20 Mol-%,
wobei die Glykolkomponente 1,3- oder 1,4-Cyclohexandimethanol in einer Menge im Bereich von 5 bis 60 Mol-% und Ethylenglykol in einer Menge im Bereich von 40 bis 95 Mol-% umfasst;
wobei die Dicarbonsäurekomponente mindestens 50 Mol-% einer Dicarbonsäurekomponente umfasst, die ein(e) Säure, Anhydrid, Säurechlorid oder ein Ester einer aromatischen Dicarbonsäure mit 8 bis 14 Kohlenstoffatomen, einer aliphatischen Dicarbonsäure mit 4 bis 12 Kohlenstoffatomen, einer cycloaliphatischen Dicarbonsäure mit 8 bis 12 Kohlenstoffatomen oder Mischungen davon ist, und
wobei das Copolyesteramid eine I.V. zwischen 0,36 und 0,58 besitzt.

8. Binderfaser nach Anspruch 7, wobei die Aminverbindung gewählt ist aus der Gruppe bestehend aus Aminoalkoholen, Aminosäuren, Diaminen, Lactamen und Mischungen davon.

9. Binderfaser nach Anspruch 7, wobei die Dicarbonsäurekomponente ein Ester oder eine Mischung von Estern von Terephthalsäure, Isophthalsäure, Naphthalindicarbonsäure oder 1,3- oder 1,4-Cyclohexandicarbonsäure ist.

10. Binderfaser nach Anspruch 7, wobei der I.V.-Wert des Copolyesteramids im Bereich von 0,40 bis 0,52 liegt.

11. Binderfaser nach Anspruch 7, wobei das Copolyesteramid in Gegenwart eines Katalysatorsystems, umfassend 10 bis 35 ppm Ti, 0 bis 70 ppm Mn, 0 bis 90 ppm Co, und in Gegenwart eines katalytischen Inhibitors, umfassend 40 bis 90 ppm P auf Basis des Gewichts des Copolyesters, gebildet wird.

12. Binderfaser nach Anspruch 7, wobei das Copolyesteramid nicht irgendwelche katalytischen Antimon-Materialien enthält.

13. Binderfaser nach Anspruch 7, wobei die Binderfaser eine Einkomponenten-Binderfaser ist.

14. Binderfaser nach Anspruch 7, wobei die Faser eine Mehrkomponenten-Binderfaser mit einer Seite-an-Seite-Konfiguration ist.

15. Binderfaser nach Anspruch 7, wobei die Faser eine Mehrkomponentenfaser ist und wobei der Polyester ein Zwischenschicht- bzw. Verbindungsschicht-Haftvermittler ist.

16. Binderfaser nach Anspruch 7, wobei die Binderfaser durch Wärme, Ultraschallfrequenzen und Radiofrequenzen aktiviert werden kann.

17. Binderfaser nach Anspruch 7, wobei die Binderfaser im Größenbereich von 20 Denier bis zu Mikrodenier-Größen liegt und wobei die Binderfaser entweder eine Einkomponenten- oder Mehrkomponenten-Binderfaser ist.

18. Binderfaser nach Anspruch 7, wobei die Binderfaser zu einem satteren Farbton gefärbt werden kann als eine Polyethylenterephthalatfaser mit der gleichen I.V.

19. Faser, umfassend ein Copolyesteramid, gebildet aus dem Reaktionsprodukt von:
einer Glykolkomponente mit einer Dicarbonsäurekomponente und einer Aminverbindung, vorliegend in einer Menge von bis zu 20 Mol-%,
wobei die Glykolkomponente 1,3- oder 1,4-Cyclohexandimethanol in einer Menge im Bereich von 5 bis 60 Mol-% und Ethylenglykol in einer Menge im Bereich von 40 bis 95 Mol-% umfasst;
wobei die Dicarbonsäurekomponente Isophthalsäure oder ein Anhydrid, Säurechlorid oder einen Ester davon in einer Menge im Bereich von höher als 10 Mol-% bis 50 Mol-% und mindestens 50 Mol-% einer Dicarbonsäurekomponente umfasst, die ein(e) Säure, Anhydrid, Säurechlorid oder Ester einer aromatischen Dicarbonsäure mit 8 bis 14 Kohlenstoffatomen, einer aliphatische Dicarbonsäure mit 4 bis 12 Kohlenstoffatomen, einer cycloaliphatische Dicarbonsäure mit 8 bis 12 Kohlenstoffatomen oder Mischungen davon ist, und
wobei das Copolyesteramid eine I.V. zwischen 0,36 und 0,70 besitzt.

20. Faser nach Anspruch 19, wobei das Copolyesteramid nicht irgendwelche katalytischen Antimon-Materialien enthält.

21. Faser nach Anspruch 19, wobei die Aminverbindung gewählt ist aus der Gruppe bestehend aus Aminoalkoholen, Aminosäuren, Diaminen, Lactamen und Mischungen davon.

22. Faser nach Anspruch 19, wobei die Faser eine Bikomponenten-Binderfaser ist, wobei die Bikomponenten-Binderfaser Folgendes umfasst:
25 bis 90 Gew.-% eines polymeren Kernteils; und
10 bis 75 Gew.-% eines Hüllenteils, umfassend das Reaktionsprodukt der Glykolkomponente, der Dicarbonsäure und der Aminverbindung.

23. Bikomponentenfaser nach Anspruch 22, wobei der Kernteil ein polymeres Material ist, gewählt aus der Gruppe bestehend aus Polyethylenterephthalat, Polycyclohexylendimethylenterephthalat, Polytrimethylenterephthalat, Polybutylenterephthalat, Polymilchsäure oder Mischungen davon.

24. Faser nach Anspruch 19, wobei die Faser eine Schmelzmischung des Polyesteramids mit einem anderen Polyester, einem Polyolefin oder einem funktionalisierten Polyolefin ist.

25. Binderfaser, umfassend ein Copolyesteramid, gebildet aus dem Reaktionsprodukt von:
einer Glykolkomponente mit einer Dicarbonsäurekomponente und einer Aminverbindung, vorliegend in einer Menge von bis zu 20 Mol-%,
wobei die Glykolkomponente 1,3- oder 1,4-Cyclohexandimethanol in einer Menge im Bereich von 5 bis 60 Mol-% und Ethylenglykol in einer Menge im Bereich von 40 bis 95 Mol-% umfasst;
wobei die Dicarbonsäurekomponente Isophthalsäure oder ein Anhydrid, Säurechlorid oder einen Ester davon in einer Menge im Bereich von höher als 10 Mol-% bis 50 Mol-%, und mindestens 50 Mol-% einer Dicarbonsäurekomponente umfasst, welche eine Säure, Anhydrid, Säurechlorid oder ein Ester einer aromatischen Dicarbonsäure mit 8 bis 14 Kohlenstoffatomen, einer aliphatischen Dicarbonsäure mit 4 bis 12 Kohlenstoffatomen, einer cycloaliphatischen Dicarbonsäure mit 8 bis 12 Kohlenstoffatomen oder Mischungen davon ist, und
wobei das Copolyesteramid eine I.V. zwischen 0,36 und 0,70 besitzt.

26. Binderfaser nach Anspruch 25, wobei die Aminverbindung gewählt ist aus der Gruppe bestehend aus Aminoalkoholen, Diaminen, Lactamen und Mischungen davon.

27. Binderfaser nach Anspruch 25, wobei die Dicarbonsäurekomponente mindestens 50 Mol-% eines Esters oder einer Mischung von Estern von Terephthalsäure, Naphthalindicarbonsäure oder 1,3- oder 1,4-Cyclohexandicarbonsäure enthält.

28. Binderfaser nach Anspruch 25, wobei die I.V. des Copolyesteramids im Bereich von 0,4 bis 0,66 liegt.

29. Binderfaser nach Anspruch 25, wobei das Copolyesteramid in Gegenwart eines Katalysatorsystems, umfassend 10 bis 35 ppm Ti, 0 bis 70 ppm Mn, 0 bis 90 ppm Co, und in Gegenwart eines katalytischen Inhibitors, umfassend 40 bis 90 ppm P, auf Basis des Gewichts des Copolyesteramids, gebildet wird.

30. Binderfaser nach Anspruch 25, wobei das Copolyesteramid nicht irgendwelche katalytischen Antimon-Materialien enthält.

31. Binderfaser nach Anspruch 25, wobei die Binderfaser eine Einkomponenten-Binderfaser ist.

32. Binderfaser nach Anspruch 25, wobei die Faser eine Mehrkomponenten-Binderfaser mit einer Seite-an-Seite-Konfiguration ist.

33. Binderfaser nach Anspruch 25, wobei die Faser eine Mehrkomponentenfaser ist und wobei der Polyester ein Zwischenschicht-Haftvermittler ist.

34. Binderfaser nach Anspruch 25, wobei die Binderfaser durch Wärme, Ultraschallfrequenzen und Radiofrequenzen aktiviert werden kann.

35. Binderfaser nach Anspruch 25, wobei die Binderfaser im Größenbereich von 20 Denier bis zu Mikrodenier-Größen liegt und wobei die Bikomponentenfaser entweder eine Einkomponenten- oder Mehrkomponenten-Binderfaser ist.

36. Binderfaser nach Anspruch 25, wobei die Binderfaser zu einem satteren Farbton gefärbt werden kann als eine Polyethylenterephthalatfaser mit der gleichen I.V.

37. Ein Copolyesteramid, gebildet aus dem Reaktionsprodukt von:
einer Glykolkomponente mit einer Dicarbonsäurekomponente und einer Aminverbindung, vorliegend in einer Menge von bis zu 20 Mol-%,
wobei die Glykolkomponente 1,3- oder 1,4-Cyclohexandimethanol in einer Menge im Bereich von 5 bis 60 Mol-% und Ethylenglykol in einer Menge im Bereich von 40 bis 95 Mol-% umfasst;
wobei die Dicarbonsäurekomponente mindestens 50 Mol-% einer Dicarbonsäurekomponente umfasst, die ein(e) Säure, Anhydrid, Säurechlorid oder ein Ester einer aromatischen Dicarbonsäure mit 8 bis 14 Kohlenstoffatomen, einer aliphatischen Dicarbonsäure mit 4 bis 12 Kohlenstoffatomen, einer cycloaliphatischen Dicarbonsäure mit 8 bis 12 Kohlenstoffatomen oder Mischungen davon ist,
wobei das Copolyesteramid eine I.V. im Bereich von 0,36 bis 0,58 besitzt und
wobei das Copolyesteramid in Gegenwart eines 10 bis 35 ppm Ti umfassenden Katalysatorsystems gebildet wird.

38. Ein Copolyesteramid, gebildet aus dem Reaktionsprodukt von:
einer Glykolkomponente mit einer Dicarbonsäurekomponente und einer Aminverbindung, vorliegend in einer Menge von bis zu 20 Mol-%,
wobei die Glykolkomponente 1,3- oder 1,4-Cyclohexandimethanol in einer Menge im Bereich von 5 bis 60 Mol-% und Ethylenglykol in einer Menge im Bereich von 40 bis 95 Mol-% umfasst;
wobei die Dicarbonsäurekomponente Isophthalsäure oder ein Anhydrid, Säurechlorid oder einen Ester davon in einer Menge im Bereich von mehr als 10 Mol-% bis 50 Mol-% und mindestens 50 Mol-% einer Dicarbonsäurekomponente umfasst, welche ein(e) Säure, Anhydrid, Säurechlorid oder ein Ester einer aromatischen Dicarbonsäure mit 8 bis 14 Kohlenstoffatomen, einer aliphatischen Dicarbonsäure mit 4 bis 12 Kohlenstoffatomen, einer cycloaliphatischen Dicarbonsäure mit 8 bis 12 Kohlenstoffatomen oder Mischungen davon ist,
wobei das Copolyesteramid eine I.V. im Bereich von 0,36 bis 0,7 besitzt und
wobei das Copolyesteramid in Gegenwart eines 10 bis 35 ppm Ti umfassenden Katalysatorsystems gebildet wird.

## Revendications

1. Fibre comprenant un copolyestéramide formé à partir du produit de réaction de :
un composant glycol avec un composant acide dicarboxylique et un composé amine présent en quantité allant jusqu'à 20 mol %,
dans laquelle le composant glycol comprend du 1,3- ou du 1,4-cyclohexanediméthanol en quantité allant de 5 à 60 mol % et de l'éthylèneglycol en quantité allant de 40 à 95 mol %,
dans laquelle le composant acide dicarboxylique comprend au moins 50 mol % d'un composant acide dicarboxylique qui est un acide, un anhydride, un chlorure d'acide ou un ester d'un acide dicarboxylique aromatique contenant de 8 à 14 atomes de carbone, d'un acide dicarboxylique aliphatique contenant de 4 à 12 atomes de carbone, d'un acide dicarboxylique cycloaliphatique ayant 8 à 12 atomes de carbone ou de mélanges de ceux-ci, et
dans laquelle le copolyestéramide a une V. I. comprise entre 0,36 et 0,58.

2. Fibre de la revendication 1, dans laquelle le copolyestéramide ne contient pas de matières catalytiques à base d'antimoine.

3. Fibre de la revendication 1, dans laquelle le composé amine est choisi dans le groupe constitué d'aminoalcools, d'aminoacides, de diamines, de lactames et de mélanges de ceux-ci.

4. Fibre de la revendication 1, dans laquelle la fibre est une fibre de liage à deux constituants, la fibre à deux constituants comprenant :
25 à 90 % en poids d'une partie noyau polymérique ; et
10 à 75 % en poids d'une partie enveloppe comprenant le produit de réaction du composant glycol, du composant acide dicarboxylique et du composé amine.

5. Fibre à deux constituants de la revendication 4, dans laquelle la partie noyau est une matière polymérique choisie dans le groupe constitué du polytéréphtalate d'éthylène, du polytéréphtalate de cyclohexylènediméthylène, du polytéréphtalate de triméthylène, du polytéréphtalate de butylène ou de mélanges de ceux-ci.

6. Fibre de la revendication 1, dans laquelle la fibre est un mélange par fusion du polyestéramide avec un autre polyester, une polyoléfine ou une polyoléfine fonctionnalisée.

7. Fibre de liage comprenant un copolyestéramide formé à partir du produit de réaction de :
un composant glycol avec un composant acide dicarboxylique et un composé amine présent en quantité allant jusqu'à 20 mol %,
dans laquelle le composant glycol comprend du 1,3- ou du 1,4-cyclohexanediméthanol en quantité allant de 5 à 60 mol %, de l'éthylèneglycol en quantité allant de 40 à 95 mol %,
dans laquelle le composant acide dicarboxylique comprend au moins 50 mol % d'un composant acide dicarboxylique qui est un acide, un anhydride, un chlorure d'acide ou un ester d'un acide dicarboxylique aromatique contenant de 8 à 14 atomes de carbone, d'un acide dicarboxylique aliphatique contenant de 4 à 12 atomes de carbone, d'un acide dicarboxylique cycloaliphatique ayant 8 à 12 atomes de carbone ou de mélanges de ceux-ci, et
dans laquelle le copolyestéramide a une V. I. comprise entre 0,36 et 0,58.

8. Fibre de liage de la revendication 7, dans laquelle le composé amine est choisi dans le groupe constitué d'aminoalcools, d'aminoacides, de diamines, de lactames et de mélanges de ceux-ci.

9. Fibre de liage de la revendication 7, dans laquelle le composant acide dicarboxylique est un ester ou un mélange d'esters de l'acide téréphtalique, de l'acide isophtalique, de l'acide naphtalènedicarboxylique ou de l'acide 1,3- ou 1,4-cyclohexanedicarboxylique.

10. Fibre de liage de la revendication 7, dans laquelle la valeur de V. I. du copolyestéramide va de 0,40 à 0,52.

11. Fibre de liage de la revendication 7, dans laquelle le copolyestéramide est formé en présence d'un système catalyseur comprenant 10 à 35 ppm de Ti, 0 à 70 ppm de Mn, 0 à 90 ppm de Co et en présence d'un inhibiteur catalytique comprenant 40 à 90 ppm de P sur la base du poids du copolyester.

12. Fibre de liage de la revendication 7, dans laquelle le copolyestéramide ne contient pas de matières catalytiques à base d'antimoine.

13. Fibre de liage de la revendication 7, dans laquelle la fibre de liage est une fibre de liage à un seul constituant.

14. Fibre de liage de la revendication 7, dans laquelle la fibre est une fibre de liage à plusieurs constituants ayant une structure juxtaposée.

15. Fibre de liage de la revendication 7, dans laquelle la fibre est une fibre à plusieurs constituants et dans laquelle le polyester est un promoteur d'adhérence de la couche d'attache.

16. Fibre de liage de la revendication 7, dans laquelle la fibre de liage peut être activée par la chaleur, des fréquences ultrasoniques et des fréquences radio.

17. Fibre de liage de la revendication 7, dans laquelle la fibre de liage a un denier allant de 20 à des tailles de microdeniers et dans laquelle la fibre de liage est soit une fibre de liage à un seul constituant soit une fibre de liage à plusieurs constituants.

18. Fibre de liage de la revendication 7, dans laquelle la fibre de liage est capable d'être teinte en un ton plus foncé qu'une fibre de polytéréphtalate d'éthylène ayant la même V. I.

19. Fibre comprenant un copolyestéramide formé à partir du produit de réaction de :
un composant glycol avec un composant acide dicarboxylique et un composé amine présent en quantité allant jusqu'à 20 mol %,
dans laquelle le composant glycol comprend du 1,3- ou du 1,4-cyclohexanediméthanol en quantité allant de 5 à 60 mol % et de l'éthylèneglycol en quantité allant de 40 à 95 mol %,
dans laquelle le composant acide dicarboxylique comprend de l'acide isophtalique ou un anhydride, un chlorure d'acide ou un ester de celui-ci en quantité allant de plus de 10 mol % à 50 mol % et au moins 50 mol % d'un composant acide dicarboxylique qui est un acide, un anhydride, un chlorure d'acide ou un ester d'un acide dicarboxylique aromatique contenant de 8 à 14 atomes de carbone, d'un acide dicarboxylique aliphatique contenant de 4 à 12 atomes de carbone, d'un acide dicarboxylique cycloaliphatique ayant 8 à 12 atomes de carbone ou de mélanges de ceux-ci, et
dans laquelle le copolyestéramide a une V. I. allant de 0,36 à 0,70.

20. Fibre de la revendication 19, dans laquelle le copolyestéramide ne contient pas de matières catalytiques à base d'antimoine.

21. Fibre de la revendication 19, dans laquelle le composé amine est choisi dans le groupe constitué d'aminoalcools, d'aminoacides, de diamines, de lactames et de mélanges de ceux-ci.

22. Fibre de la revendication 19, dans laquelle la fibre est une fibre de liage à deux constituants, la fibre à deux constituants comprenant :
25 à 90 % en poids d'une partie noyau polymérique ; et
10 à 75 % en poids d'une partie enveloppe comprenant le produit de réaction du composant glycol, de l'acide dicarboxylique et du composé amine.

23. Fibre à deux constituants de la revendication 22, dans laquelle la partie noyau est une matière polymérique choisie dans le groupe constitué du polytéréphtalate d'éthylène, du polytéréphtalate de cyclohexylènediméthylène, du polytéréphtalate de triméthylène, du polytéréphtalate de butylène, du poly(acide lactique) ou de mélanges de ceux-ci.

24. Fibre de la revendication 19, dans laquelle la fibre est un mélange par fusion du polyestéramide avec un autre polyester, une polyoléfine ou une polyoléfine fonctionnalisée.

25. Fibre de liage comprenant un copolyestéramide formé à partir du produit de réaction de :
un composant glycol avec un composant acide dicarboxylique et un composé amine présent en quantité allant jusqu'à 20 mol %,
dans laquelle le composant glycol comprend du 1,3- ou du 1,4-cyclohexanediméthanol en quantité allant de 5 à 60 mol %, de l'éthylèneglycol en quantité allant de 40 à 95 mol %,
dans laquelle le composant acide dicarboxylique comprend de l'acide isophtalique ou un anhydride, un chlorure d'acide ou un ester de celui-ci en quantité allant de plus de 10 mol % à 50 mol % et au moins 50 mol % d'un composant acide dicarboxylique qui est un acide, un anhydride, un chlorure d'acide ou un ester d'un acide dicarboxylique aromatique contenant de 8 à 14 atomes de carbone, d'un acide dicarboxylique aliphatique contenant de 4 à 12 atomes de carbone, d'un acide dicarboxylique cycloaliphatique ayant 8 à 12 atomes de carbone ou de mélanges de ceux-ci, et
dans laquelle le copolyestéramide a une V. I. allant de 0,36 à 0,70.

26. Fibre de liage de la revendication 25, dans laquelle le composé amine est choisi dans le groupe constitué d'aminoalcools, de diamines, de lactames et de mélanges de ceux-ci.

27. Fibre de liage de la revendication 25, dans laquelle le composant acide dicarboxylique contient au moins 50 mol % d'un ester ou d'un mélange d'esters de l'acide téréphtalique, de l'acide naphtalènedicarboxylique ou de l'acide 1,3- ou 1,4-cyclohexanedicarboxylique.

28. Fibre de liage de la revendication 25, dans laquelle la V. I. du copolyestéramide va de 0,4 à 0,66.

29. Fibre de liage de la revendication 25, dans laquelle le copolyestéramide est formé en présence d'un système catalyseur comprenant 10 à 35 ppm de Ti, 0 à 70 ppm de Mn, 0 à 90 ppm de Co et en présence d'un inhibiteur catalytique comprenant 40 à 90 ppm de P sur la base du poids du copolyestéramide.

30. Fibre de liage de la revendication 25, dans laquelle le copolyestéramide ne contient pas de matières catalytiques à base d'antimoine.

31. Fibre de liage de la revendication 25, dans laquelle la fibre de liage est une fibre de liage à un seul constituant.

32. Fibre de liage de la revendication 25, dans laquelle la fibre est une fibre de liage à plusieurs constituants ayant une structure juxtaposée.

33. Fibre de liage de la revendication 25, dans laquelle la fibre est une fibre à plusieurs constituants et dans laquelle le polyester est un promoteur d'adhérence de la couche d'attache.

34. Fibre de liage de la revendication 25, dans laquelle la fibre de liage peut être activée par la chaleur, des fréquences ultrasoniques et des fréquences radio.

35. Fibre de liage de la revendication 25, dans laquelle la fibre de liage a un denier allant de 20 à des tailles de microdeniers et dans laquelle la fibre de liage est soit une fibre de liage à un seul constituant soit une fibre de liage à plusieurs constituants.

36. Fibre de liage de la revendication 25, dans laquelle la fibre de liage est capable d'être teinte en un ton plus foncé qu'une fibre de polytéréphtalate d'éthylène ayant la même V. I.

37. Copolyestéramide formé à partir du produit de réaction de :
un composant glycol avec un composant acide dicarboxylique et un composé amine présent en quantité allant jusqu'à 20 mol %,
dans lequel le composant glycol comprend du 1,3- ou du 1,4-cyclohexanediméthanol en quantité allant de 5 à 60 mol % et de l'éthylèneglycol en quantité allant de 40 à 95 mol %,
dans lequel le composant acide dicarboxylique comprend au moins 50 mol % d'un composant acide dicarboxylique qui est un acide, un anhydride, un chlorure d'acide ou un ester d'un acide dicarboxylique aromatique contenant de 8 à 14 atomes de carbone, d'un acide dicarboxylique aliphatique contenant de 4 à 12 atomes de carbone, d'un acide dicarboxylique cycloaliphatique ayant 8 à 12 atomes de carbone ou de mélanges de ceux-ci,
dans lequel le copolyestéramide a une V. I. allant de 0,36 à 0,58, et
dans lequel le copolyestéramide est formé en présence d'un système catalyseur comprenant 10 à 35 ppm de Ti.

38. Copolyestéramide formé à partir du produit de réaction de :
un composant glycol avec un composant acide dicarboxylique et un composé amine présent en quantité allant jusqu'à 20 mol %,
dans lequel le composant glycol comprend du 1,3- ou du 1,4-cyclohexanediméthanol en quantité allant de 5 à 60 mol % et de l'éthylèneglycol en quantité allant de 40 à 95 mol %,
dans lequel le composant acide dicarboxylique comprend de l'acide isophtalique ou un anhydride, un chlorure d'acide ou un ester de celui-ci en quantité allant de plus de 10 mol % à 50 mol % et au moins 50 mol % d'un composant acide dicarboxylique qui est un acide, un anhydride, un chlorure d'acide ou un ester d'un acide dicarboxylique aromatique contenant de 8 à 14 atomes de carbone, d'un acide dicarboxylique aliphatique contenant de 4 à 12 atomes de carbone, d'un acide dicarboxylique cycloaliphatique ayant 8 à 12 atomes de carbone ou de mélanges de ceux-ci
dans lequel le copolyestéramide a une V. I. allant de 0,36 à 0,7 et
dans lequel le copolyestéramide est formé en présence d'un système catalyseur comprenant 10 à 35 ppm de Ti.
